# EUROPEAN PATENT SPECIFICATION

(11) **EP 2 693 019 B1**
(45) Date of publication and mention of the grant of the patent: **05.04.2017**
(21) Application number: 12764283.3
(22) Date of filing: 09.02.2012
(51) Int. Cl.: F02B 63/02, F02N 11/04, H02K 7/14, H02K 7/18, B25F 5/00

(54) **MOBILE OPERATING MACHINE HAVING HYBRID DRIVING SYSTEM**
MOBILE BETRIEBSMASCHINE MIT EINEM HYBRIDANTRIEBSSYSTEM
MACHINE D'EXPLOITATION MOBILE DOTÉE D'UN SYSTÈME D'ENTRAÎNEMENT HYBRIDE

(30) Priority: 31.03.2011 JP 2011080892
(43) Date of publication of application: 05.02.2014
(73) Proprietor: Makita Corporation, Anjo-shi, Aichi 446-8502 (JP)
(72) Inventor: YANAGIHARA, Kenya, Anjo-shi, Aichi 446-8502 (JP)
(74) Representative: Müller-Boré & Partner Patentanwälte PartG mbB
(86) International application number: PCT/JP2012/052934
(87) International publication number: WO 2012/132564

(56) References cited:
- GB-A- 2 461 536
- JP-A- 5 302 526
- JP-A- 7 001 975
- JP-A- 2001 173 024
- JP-A- 2002 089 417
- JP-A- 2005 297 742
- JP-A- 2006 314 278
- JP-A- 2009 036 183
- JP-A- 2009 041 668
- US-A1- 2006 248 731
- US-A1- 2008 134 522

## Description

### TECHNICAL FIELD

The present teachings relates to a human-carried, e.g. a hand-held or shoulder-held work machine.

### BACKGROUND ART

JP2010-84673A discloses a mower. The mower is a kind of a human-carried work machine powered by an engine, more specifically is provided with the engine as a prime mover for driving a mowing blade.

US 2006/0248731 A1 discloses a bush cutter wherein a cutter is coupled to a tip of a driven shaft rotatably attached in an operating arm as a main body of a bush cutter, and the other end thereof is provided to a driven side coupling portion selectively coupled with any one of a driving side coupling portion of an engine output shaft and a driving side coupling portion of a motor output shaft. To a driven side joint provided in the other end of the operating arm, any one of an engine output side joint of an engine and an engine output side joint of an electric motor is selectively detachably attached. An engine revolution regulator is connected to the engine through a cable, a motor revolution regulator is connected to the electric motor through an electric cord, and these regulators are detachably attached to a handle of the operating arm.

GB 2461536 A discloses a block paving cleaner wherein a rotating wire brush attached to an electric motor or a petrol engine provides a circular motion to the brush causing the brush to rotate. The brush 5, on contact with the grooves in the block pavement removes moss, weeds, plants, debris and other unwanted material.

### SUMMARY OF INVENTION

### Technical Problem

There is a need for high output in a human-carried work machine to improve work efficiency. On account of this, efforts have been made to develop an engine with increased displacement. However, there are the drawbacks of requiring a long time and high cost to develop a new engine.

With the foregoing in view, the present description provides teachings which enable to increase an output of a human-carried work machine without needing the engine with increased displacement.

### Solution to Technical Problem

In the present teachings, both of an engine and an electric motor are used as a prime mover to drive a tool. With the electric motor being installed in addition to the engine in the configuration, an output of a work machine can be increased even though a size of the engine is identical to that of a conventional engine. Hence, an engine with large displacement amount is not required. Since there is no need to newly develop an engine with large displacement, a high power human-carried work machine can be realized without spending a lot of time and cost for the development.

### BRIEF DESCRIPTION OF DRAWINGS

FIG. 1 is a view showing an external appearance of a mower of an embodiment.
FIG. 2 is a view showing a rear portion of a power unit of the mower.
FIG. 3 is a sectional view taken along a line III-III in Fig. 2, and is a view showing an inner structure of the power unit.
FIG. 4 is a block diagram showing an electric configuration of the mower of the embodiment.

### DESCRIPTION OF EMBODIMENTS

According to the present invention, the engine includes an output shaft (for example, crankshaft) connected to a tool and an electric motor is configured to apply torque to the output shaft of the engine. According to the configuration, not only a human-carried work machine can simply be designed, but also loss of the torque outputted by the electric motor can be reduced.

In one embodiment of the present teachings, it is preferable that the electric motor is fixed to the output shaft of the engine and includes a rotor that is provided with at least one magnet. In this case, it is further preferable that the rotor is provided with a cooling fan that is configured to send cooling air to the engine.

In one embodiment of the present teachings, it is preferable that the electric motor includes a stator core that is fixed to a case (including a crankcase or a cylinder block) of the engine and faces the magnet of the rotor. In this case, it is preferable that the rotor includes a peripheral wall that surrounds the stator core, and the magnet is disposed on an inner surface of the peripheral wall.

In one embodiment of the present teachings, it is preferable that the electric motor is configured to further function as an electric generator. According to the configuration, when there is an allowance in an output of the engine, electric energy can be stored. Alternatively, an increase in an energy efficiency and a reduction in a carbon dioxide emission amount can be achieved by performing regenerative braking for the tool.

In the embodiment described above, it is preferable that the human-carried work machine further includes an operable portion that is configured to be operated by a user to adjust the output of the engine. In addition, it is preferable that when an amount of operation applied
to the operable portion is less than a first predetermined amount, the electric motor is configured to serve as the electric generator, and when the amount of operation applied to the operable portion is more than a second predetermined amount, the electric motor is configured to serve as the prime mover for driving the tool.

In one embodiment of the present teachings, it is preferable that the electric motor is configured to function as a "cell" motor (starter motor) for starting the engine. That is, it is preferable that the electric motor rotates the engine by applying the torque to the crankshaft when the user starts the engine (that is, when the user operates a starter switch). According to the configuration, the user can easily start the engine.

In one embodiment of the present teachings, the human-carried work machine may be any of a mower, a weeder, a chain saw, a circular cutter (cut-off saw), a sprayer, a duster, a blower, or a dust collector. In this case, the tools of the human-carried work machine include not only cutters of a moving blade, a saw chain and the like but a blowing fan and a pump. Incidentally, the human-carried work machines are not limited to the examples described above but widely include work machines which the user carries to perform operations.

In one embodiment of the present teachings, the engine for driving the tool may be either of a two stroke engine or a four stroke engine. Or, the engine may be an engine of other style (typically, internal combustion engine). The style of the engine is not particularly limited.

In one embodiment of the present teachings, the electric motor for driving the tool may be either of a motor with a brush or a brushless motor. Or, the electric motor may be an electric motor of other style (typically, direct current motor). The style of the electric motor is not particularly limited. However, in a human-carried work machine which utilizes a combustible fuel, it is preferable to adopt a brushless motor which does not need a contact type commutator.

In one embodiment of the present teachings, it is preferable that the human-carried work machine includes an electric power storage and electric power stored to the electric power storage is supplied to the electric motor. In addition, it is also preferable that in the human-carried work machine the electric power generated by the electric motor is supplied to the electric power storage to store. As one example, the electric power storage can adopt a battery pack that incorporates multiple secondary battery cells. In this case, it is further preferable that the secondary battery cell is a lithium ion cell.

In the embodiment described above, a battery pack developed for an electric power tool can be preferably employed. The battery pack developed for the electric power tool, particularly, the battery pack that includes the lithium ion cell has a large capacity, and can discharge a large current. Consequently, the engine can sufficiently be assisted by the motor and the electric power that is generated by the motor can be stored by a large amount by adopting such a battery pack. Consequently, it is preferable that the human-carried work machine includes a battery attaching portion that attachably and detachably receives the battery pack (for example, a battery pack of a slidingly attachable and detachable type) that is developed for the electric power tool.

In one embodiment of the teachings, it is preferable that the human-carried work machine performs idling stop. That is, it is preferable to automatically stop and start the engine in accordance with an operation of a throttle lever or a lock-off release switch by the user.

### EMBODIMENT 1

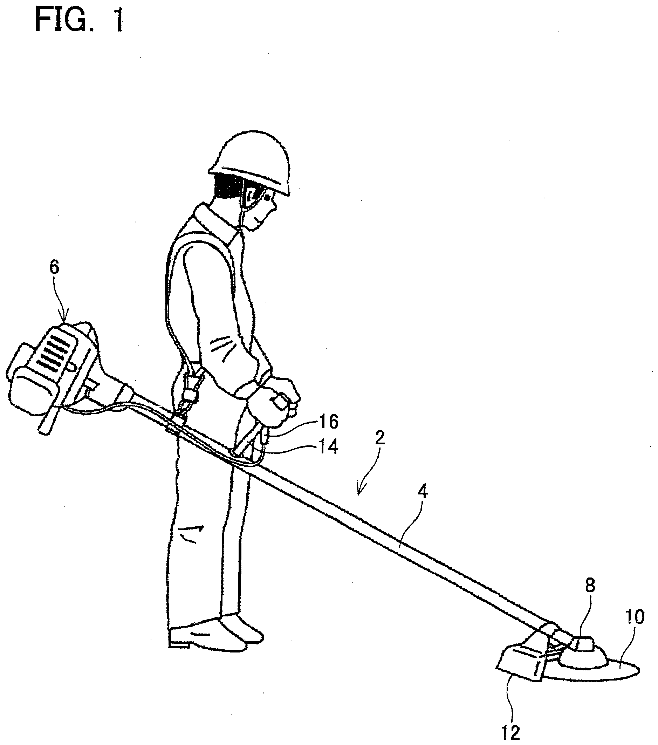

FIG. 1 shows an external appearance of a mower 2 of an embodiment. The mower 2 is an example of a human-carried work machine. The mower 2 is provided with an operation rod 4, a power unit 6 attached to a rear end portion of the operation rod 4, a gear head 8 attached to a front end portion of the operation rod 4, a mowing blade 10 in a circular disk shape attached to the gear head 8, a safety cover 12 attached to the front end portion of the operation rod 4 to cover the mowing blade 10, and a handle 14 attached to a middle portion of the operation rod 4.

The operation rod 4 is formed in a hollow pipe shape, and extended linearly. A drive shaft (not illustrated) is contained at inside of the operation rod 4. Torque outputted from the power unit 6 is transmitted to the gear head 8 via the drive shaft at inside of the operation rod 4 to rotate the mowing blade 10. The handle 14 is provided with a throttle lever 16 which performs a throttle operation of an engine 20 described later, and a stop switch (not illustrated) for stopping the engine 20. The throttle lever 16 is an operable portion operated by a user for adjusting an output of the engine.

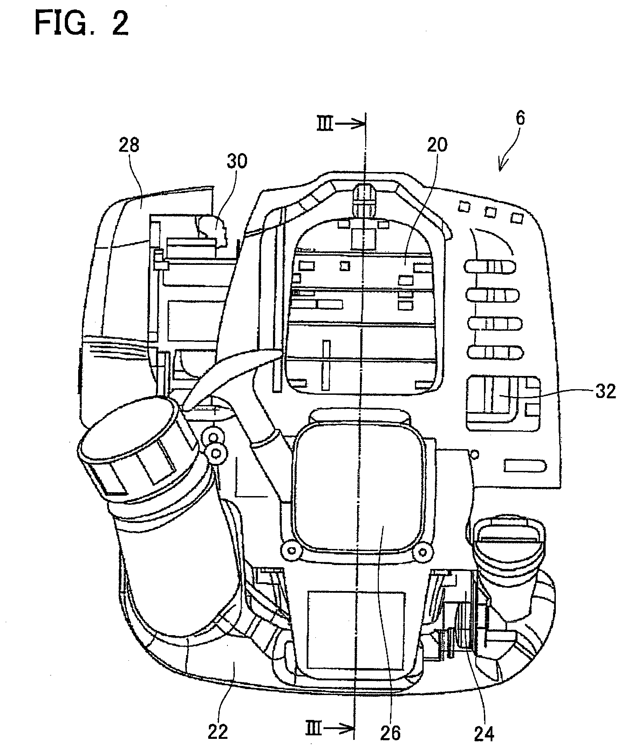

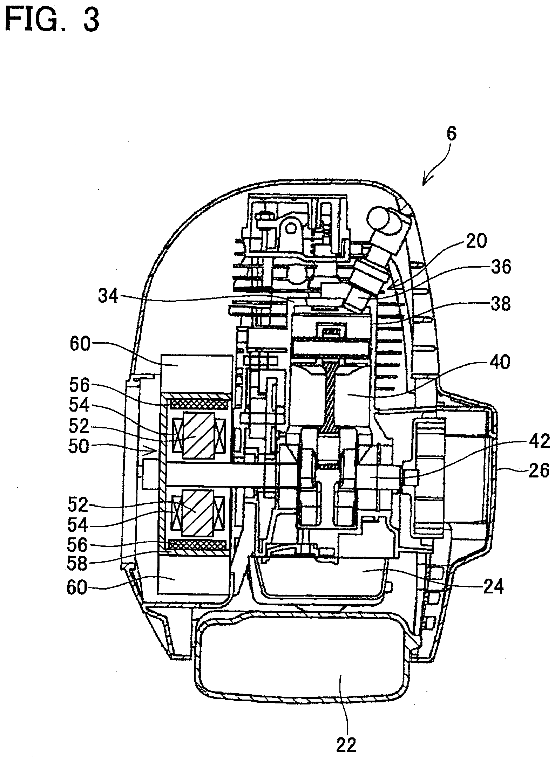

As shown in FIG 2 and FIG 3, the power unit 6 is provided with the engine 20, a fuel tank 22 for storing fuel of the engine 20, a recoil starter 26 for starting the engine 20, an air cleaner 28 for filtering air supplied to the engine 20, a carburetor 30 for mixing fuel to the supplied air, and a muffler 32 for discharging exhaust gas from the engine 20 to the atmosphere. The carburetor 30 is connected to the throttle lever 16, and a throttle position of the carburetor 30 is changed in accordance with an operation of the throttle lever 16.

The engine 20 is a four stroke engine of a separate oiling system. The engine 20 is provided with a cylinder 34, a piston 38 accommodated in the cylinder 34, an ignition plug 36 provided at the cylinder 34, a crankcase 40, a crankshaft 42 accommodated in the crankcase 40, and an oil pan 24. The crankshaft 42 is an output shaft of the engine 20, and connected to the drive shaft via a centrifugal clutch (not illustrated). Thereby, the output of the engine 20 is transmitted to the mowing blade 10 through the drive shaft. That is, the engine 20 is a prime mover for driving the mowing blade 10.

As shown in FIG. 3, the power unit 6 is further provided with a motor 50. The motor 50 is a brushless three phase motor of an outer rotor type. The motor 50 is provided with stator cores 52, stator coils 54, an outer rotor 58, and magnets 56. The stator core 52 is formed by a magnetic material, and is fixed to the crankcase 40. The stator coil 54 is wound around the stator core 52 and excites the stator core 52 when electricity is conducted. The outer rotor 58 is fixed to the crankshaft 42, and is rotated along with the crankshaft 42. The outer rotor 58 is formed in a cup-like shape having a peripheral wall in a circular cylinder shape and a bottom wall provided to one end of the peripheral wall, and the peripheral wall surrounds the stator core 52. The magnets 56 are fixed to an inner peripheral face of the outer rotor 58, and face the stator cores 52 disposed inside the outer rotor 58.

An output of the motor 50 is applied from the outer rotor 58 to the crankshaft 42 of the engine 20, and is transmitted to the mowing blade 10 through the drive shaft. That is, the motor 50 is a second prime mover for driving the mowing blade 10. As described above, the mower 2 of the embodiment is a human-carried work machine of a hybrid type having different kinds of the prime movers of the engine 20 and the motor 50. For example, the engine 20 of the embodiment is an engine having the displacement of 25 cc (25 milliliters), and has an output of about 700 watts. On the other hand, the motor 50 has an output of about 650 watts. Consequently, a combination of the engine 20 and the motor 50 has an output of about 1350 watts, and the value corresponds to a 4 stroke engine having the displacement of 45 cc (45 milliliters). Thus, an output equivalent to that of an engine having a large displacement can be realized by combining the engine 20 and the motor 50, while using the engine 20 having a small displacement.

In addition, the motor 50 can function also as a generator for converting rotational energy of the crankshaft 42 to electric energy. For example, when there is an allowance in the output of the engine 20, a portion of the output of the engine 20 is converted into electric power by the motor 50. The electric power generated by the motor 50 is stored to a battery pack 90 described later.

Moreover, the motor 50 can function as a "cell" motor (starter motor) for starting the engine 20. When the user operates a start switch (not illustrated), electric power is supplied from the battery pack 90 to the motor 50, and the motor 50 rotates the crankshaft 42. Thereby, the engine 20 is started.

The outer rotor 58 of the motor 50 is integrally provided with a cooling fan 60. The cooling fan 60 is provided at an outer peripheral face of the peripheral wall of the outer rotor 58. The cooling fan 60 is configured to fan the engine 20, the motor 50, and a controller unit 70 to cool. Incidentally, a position of arranging the motor 50 is a position at which a cooling fan is arranged in a conventional product. An enlargement of a size from that of the conventional product and a change in design are restrained by integrally forming the cooling fan 60 and the outer rotor 58.

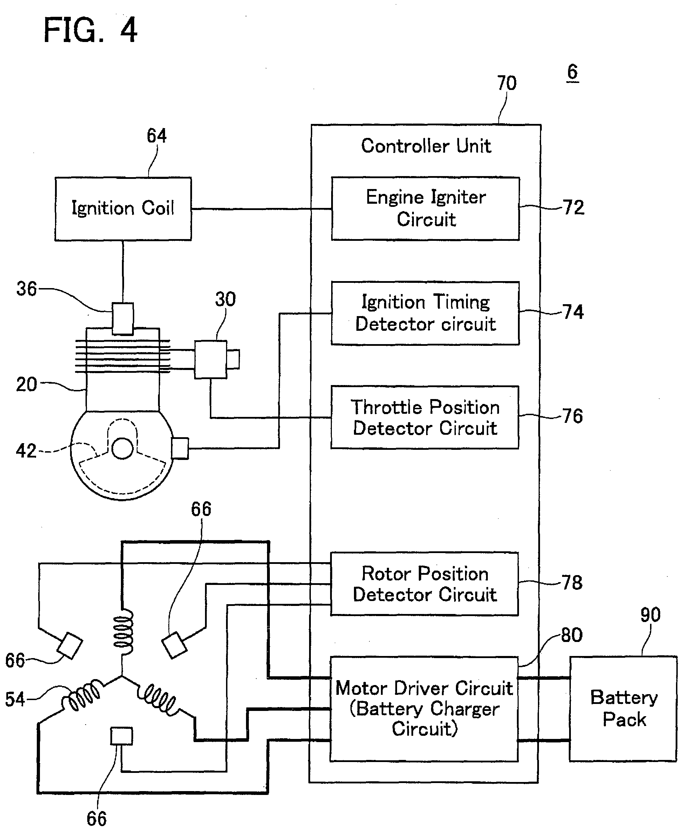

FIG 4 is a block diagram showing an electric configuration of the power unit 6. As shown in FIG 4, the power unit 6 is provided with the controller unit 70, and the battery pack 90 connected to the controller unit 70. The controller unit 70 is configured by multiple integrated circuits including a microcomputer. The controller unit 70 is a control portion for controlling operations of the engine 20 and the motor 50. The battery pack 90 contains multiple secondary battery cells, and supplies electric power to the motor 50 and the ignition plug 36 via the controller unit 70. The battery pack 90 of the embodiment is a battery pack containing a lithium ion cell, and having a nominal voltage of 18 volts.

The controller unit 70 is functionally provided with an engine igniter circuit 72, an ignition timing detector circuit 74, a throttle position detector circuit 76, a rotor position detector circuit 78, and a motor driver circuit 80. The engine igniter circuit 72 supplies the electric power from the battery pack 90 to the ignition plug 36. At this time, the electric power from the battery pack 90 is boosted in voltage by the ignition coil 64. An electric discharge is produced by the ignition plug 36 and an ignition to an air fuel mixture is carried out. The ignition timing detector circuit 74 determines ignition timing of the ignition plug 36 while detecting a rotational position of the crankshaft 42. The determined ignition timing is taught to the engine igniter circuit 72. The throttle position detector circuit 76 is connected to the carburetor 30, and detects a throttle position of the carburetor 30. Incidentally, the throttle position detector circuit 76 may detect an operation amount of the throttle lever 16 by the user in place of the throttle position of the carburetor 30.

The rotor position detector circuit 78 is connected to an encoder 66 of the motor 50, and detects a rotational position of the outer rotor 58. The motor driver circuit 80 is provided with multiple plural switching elements, and selectively connects respective phases of the stator coils 54 and respective electrodes of the battery pack 90 in accordance with the detected rotational position of the outer rotor 58. Moreover, the motor driver circuit 80 can perform a PWM control of the motor 50 and can control the output of the motor 50 in accordance with the detected throttle position of the carburetor 30. Also, the motor driver circuit 80 can make the motor 50 function as the generator by changing switching modes of the multiple switching elements. Thereby, the battery pack 90 can be charged. That is, the motor driver circuit 80 functions also as the battery charge circuit.

In a case where an amount of a growth of weeds to be mown is a small amount (thin), the user operates the throttle lever 16 by a small amount. In this case, the throttle position of the carburetor 30 is also small, and there is an allowance in the output of the engine 20. Consequently, the controller unit 70 makes the motor 50 function as the generator and charges the battery pack 90 by the output of the engine 20.

In a case where the amount of the growth of weeds to be mown is a middle amount, the user operates the throttle lever 16 to a middle degree. In this case, also the throttle position of the carburetor 30 is to a middle degree, and there is no excess and deficiency in the output of the engine 20. Consequently, the controller unit 70 does not make the motor 50 function also as the generator and does not make the motor 50 function also as the prime mover.

In a case where the amount of the growth of weeds to be mown is a large amount (thick), the user operates the throttle lever 16 by a large amount. In this case, the throttle position of the carburetor 30 is maximized, and the output of the engine 20 may be deficient. Consequently, the controller unit 70 makes the motor 50 function as the prime mover, and assists a deficient output of the engine 20 by the motor 50. A large amount of the growth of weeds can strongly be mown by driving the mowing blade 10 by both of the engine 20 and the motor 50.

In a case where although the throttle lever 16 is operated by a large amount, the amount of the growth of weeds to be mown is a small amount, or in a state of idling in which the mowing is not performed, a rotational frequency of the engine may be more than a predetermined value (for example, rotational frequency achieving maximum output), and at this time, it can be said that there is the allowance in the output of the engine. Consequently, when the rotational frequency of the engine is more than the predetermined value (particularly, the rotational frequency achieving the maximum output), it is preferable that the controller unit 70 makes the motor 50 function as the generator and charges the battery pack 90 by the output of the engine 20.

When the user pulls back the throttle lever 16 to an original point position, the controller unit 70 stops feeding electricity to the ignition plug 36 and stops the engine 20. This is so-called idling stop. Thereafter, when the user operates the throttle lever 16, the controller unit 70 drives the crankshaft 42 by the motor 50 and restarts the engine 20. An energy consumption amount and an exhaust gas emission amount are reduced by avoiding useless idling.

Specific embodiment of the present teachings is described above, but this merely illustrates some possibilities of the teachings and do not restrict the claims thereof. The art set forth in the claims includes variations and modifications of the specific example set forth above. The technical elements disclosed in the specification or the drawings may be utilized separately or in all types of combinations, and are not limited to the combinations set forth in the claims at the time of filing of the application. Furthermore, the art disclosed herein may be utilized to simultaneously achieve a plurality of aims or to achieve one of these aims.

## Claims

1. A human-carried work machine (2) comprising an engine (20) and an electric motor (50) as prime movers for driving a tool (10),
wherein
the engine (20) comprises an output shaft (42) that is connected to the tool (10), **characterised in that** the electric motor (50) is configured to apply torque to the output shaft (42) of the engine (20).

2. The human-carried work machine (2) as in claim 1, wherein the electric motor (50) comprises a rotor (58) that is fixed to the output shaft (42) of the engine (20) and is provided with at least one magnet (56).

3. The human-carried work machine (2) as in claim 2, wherein the rotor (58) is provided with a cooling fan (60) that is configured to send cooling air to the engine (20).

4. The human-carried work machine (2) as in claim 2 or 3, wherein the electric motor (50) comprises a stator core (52) that is fixed to a crankcase (40) of the engine (20) and faces the magnet (56) of the rotor (58).

5. The human-carried work machine (2) as in claim 4, wherein the rotor (58) comprises a peripheral wall that surrounds the stator core (52) and the magnet (56) is disposed on an inner surface of the peripheral wall.

6. The human-carried work machine (2) as in any one of claims 1 to 5, wherein the electric motor (50) is configured to further function as an electric generator.

7. The human-carried work machine (2) as in claim 6, further comprising a battery (90) that is configured to supply electric power to the electric motor (50), wherein electric power generated by the electric motor (50) is stored in the battery (90).

8. The human-carried work machine (2) as in claim 6 or 7, further comprising an operable portion (16) that is configured to be operated by a user to adjust output of the engine (20),
wherein the electric motor (50) is configured to serve as the electric generator when an amount of operation applied to the operable portion (16) is less than a first predetermined amount, and to serve as the prime mover for driving the tool (10) when the amount of operation applied to the operable portion (16) is more than a second predetermined amount.

9. The human-carried work machine (2) as in claim 6 or 7, wherein the electric motor (50) is configured to serve as the electric generator when a rotational frequency of the engine (20) is equal to or more than a predetermined value.

10. The human-carried work machine (2) as in any one of claims 1 to 9, wherein the electric motor (50) is configured to function as a starter motor for starting the engine (20).

11. The human-carried work machine (2) as in any one of claims 1 to 10, wherein the electric motor (50) is a brushless motor.

## Patentansprüche

1. Von einem Menschen getragene Arbeitsmaschine (2), die einen Verbrennungsmotor (20) und einen Elektromotor (50) als Antriebmaschinen zum Antreiben eines Werkzeugs (10) umfasst,
wobei
der Verbrennungsmotor (20) eine Ausgangswelle (42) umfasst, die mit dem Werkzeug (10) verbunden ist, **dadurch gekennzeichnet, dass** der Elektromotor (20) aufgebaut ist, um ein Drehmoment auf die Ausgangswelle (42) des Verbrennungsmotors (20) anzuwenden.

2. Von einem Menschen getragene Arbeitsmaschine (2) nach Anspruch 1, wobei der Elektromotor (50) einen Rotor (58) umfasst, der an der Ausgangswelle (42) des Verbrennungsmotors (20) befestigt ist und mit wenigstens einem Magneten (56) versehen ist.

3. Von einem Menschen getragene Arbeitsmaschine (2) nach Anspruch 2, wobei der Rotor (58) mit einem Kühlventilator (60) versehen ist, der aufgebaut ist, um Kühlluft zu dem Verbrennungsmotor (20) zu befördern.

4. Von einem Menschen getragene Arbeitsmaschine (2) nach Anspruch 2 oder 3, wobei der Elektromotor (50) einen Statorkern (52) umfasst, der an einem Kurbelgehäuse (40) des Verbrennungsmotors (20) befestigt ist und dem Magneten (56) des Rotors (58) zugewandt ist.

5. Von einem Menschen getragene Arbeitsmaschine (2) nach Anspruch 4, wobei der Rotor (58) eine Umfangswand umfasst, die den Statorkern (52) umgibt, und der Magnet (56) auf einer Innenfläche der Umfangswand angeordnet ist.

6. Von einem Menschen getragene Arbeitsmaschine (2) nach einem der Ansprüche 1 bis 5, wobei der Elektromotor (50) aufgebaut ist, um ferner als ein elektrischer Generator zu arbeiten.

7. Von einem Menschen getragene Arbeitsmaschine (2) nach Anspruch 6, ferner eine Batterie (90) umfasst, die aufgebaut ist, um elektrische Leistung an den Elektromotor (50) zuzuführen, wobei von dem Elektromotor (50) erzeugte elektrische Leistung in der Batterie (90) gespeichert wird.

8. Von einem Menschen getragene Arbeitsmaschine (2) nach Anspruch 6 oder 7, die ferner einen Bedienabschnitt (16) umfasst, der aufgebaut ist, um von einem Benutzer bedient zu werden, um die Ausgangsleistung des Verbrennungsmotors (20) einzustellen,
wobei der Elektromotor (50) aufgebaut ist, um als ein elektrischer Generator zu dienen, wenn eine Bediengröße, die auf den Bedienabschnitt (16) angewendet wird, kleiner als eine erste vorgegebene Größe ist, und als eine Antriebsmaschine zum Antreiben des Werkzeugs (10) zu dienen, wenn eine Bediengröße, die auf den Bedienabschnitt (16) angewendet wird, größer als eine zweite vorgegebene Größe ist.

9. Von einem Menschen getragene Arbeitsmaschine (2) nach Anspruch 6 oder 7, wobei der Elektromotor (50) aufgebaut ist, um als der elektrische Generator zu dienen, wenn eine Drehfrequenz des Verbrennungsmotors (20) größer oder gleich einem vorgegebenen Wert ist.

10. Von einem Menschen getragene Arbeitsmaschine (2) nach einem der Ansprüche 1 bis 9, wobei der Elektromotor (50) aufgebaut ist, um als ein Starter- bzw. Anlassermotor zum Starten bzw. Anlassen des Verbrennungsmotors (20) zu dienen.

11. Von einem Menschen getragene Arbeitsmaschine (2) nach einem der Ansprüche 1 bis 10, wobei der Elektromotor (50) ein bürstenloser Motor ist.

## Revendications

1. Machine de travail portée par l'homme (2) comprenant un moteur (20) et un moteur électrique (50) comme moteurs d'entraînement pour entraîner un outil (10),
dans laquelle
le moteur (20) comprend un arbre de sortie (42) qui est connecté à l'outil (10), **caractérisée en ce que**
le moteur électrique (50) est configuré pour appliquer un couple à l'arbre de sortie (42) du moteur (20).

2. Machine de travail portée par l'homme (2) selon la revendication 1, dans laquelle le moteur électrique (50) comprend un rotor (58) qui est fixé à l'arbre de sortie (42) du moteur (20) et est pourvu d'au moins un aimant (56).

3. Machine de travail portée par l'homme (2) selon la revendication 2, dans laquelle le rotor (58) est pourvu d'un ventilateur (60) qui est configuré pour envoyer de l'air de refroidissement au moteur (20).

4. Machine de travail portée par l'homme (2) selon la revendication 2 ou 3, dans laquelle le moteur électrique (50) comprend un noyau de stator (52) qui est fixé à un carter de moteur (40) du moteur (20) et fait face à l'aimant (56) du rotor (58).

5. Machine de travail portée par l'homme (2) selon la revendication 4, dans laquelle le rotor (58) comprend une paroi périphérique qui entoure le noyau de stator (52) et l'aimant (56) est disposé sur une surface interne de la paroi périphérique.

6. Machine de travail portée par l'homme (2) selon l'une quelconque des revendications 1 à 5, dans laquelle le moteur électrique (50) est configuré pour fonctionner en outre comme générateur électrique.

7. Machine de travail portée par l'homme (2) selon la revendication 6, comprenant en outre une batterie (90) qui est configurée pour fournir de la puissance électrique au moteur électrique (50), dans laquelle de la puissance électrique générée par le moteur électrique (50) est stockée dans la batterie (90).

8. Machine de travail portée par l'homme (2) selon la revendication 6 ou 7, comprenant en outre une portion pouvant être opérée (16) qui est configurée pour être opérée par un utilisateur pour ajuster la sortie du moteur (20),
dans laquelle le moteur électrique (50) est configuré pour servir de générateur électrique lorsqu'une quantité d'opération appliquée à la portion pouvant être opérée (16) est inférieure à une première quantité prédéterminée et pour servir de moteur d'entraînement pour entraîner l'outil (10) lorsque la quantité d'opération appliquée à la portion pouvant être opérée (16) est supérieure à une seconde quantité prédéterminée.

9. Machine de travail portée par l'homme (2) selon la revendication 6 ou 7, dans laquelle le moteur électrique (50) est configuré pour servir de générateur électrique lorsqu'une fréquence rotative du moteur (20) est supérieure ou égale à une valeur prédéterminée.

10. Machine de travail portée par l'homme (2) selon l'une quelconque des revendications 1 à 9, dans laquelle le moteur électrique (50) est configuré pour fonctionner comme démarreur pour démarrer le moteur (20).

11. Machine de travail portée par l'homme (2) selon l'une quelconque des revendications 1 à 10, dans laquelle le moteur électrique (50) est un moteur sans balai.
